# EUROPEAN PATENT SPECIFICATION

(11) **EP 1 613 000 B1**
(45) Date of publication and mention of the grant of the patent: **18.06.2008**
(21) Application number: 04717013.9
(22) Date of filing: 04.03.2004
(51) Int. Cl.: H04L 12/42, H04L 12/28, H04J 3/16

(54) **METHOD OF DYNAMIC LOSSLESS ADJUSTING THE BANDWIDTH OF THE IN-LINE RESILIENT PACKET RING NETWORK**
VERFAHREN ZUR DYNAMISCHEN VERLUSTFREIEN EINSTELLUNG DER BANDBREITE EINES INLINE RESILIENT PACKET RING-NETZES
PROCEDE DE REGLAGE DYNAMIQUE SANS PERTE DE LA LARGEUR DE BANDE DE RESEAU EN ANNEAU PAR PAQUET FLEXIBLE

(30) Priority: 11.03.2003 CN 3119558.X
(43) Date of publication of application: 04.01.2006
(73) Proprietor: Huawei Technologies Co., Ltd., 518129 Longgang District, Shenzhen (CN)
(72) Inventor: TANG, Yong Huawei Administration Building, Guangdong (CN); QUAN, Xingyue Huawei Administration Building, Guangdong (CN)
(74) Representative: Körber, Martin Hans
(86) International application number: PCT/CN2004/000170
(87) International publication number: WO 2004/082220

(56) References cited:
- GB-A- 2 378 866
- US-A- 6 011 804
- US-B1- 6 356 559
- JONES NEVIN ET AL: "Proposed text on link capacity adjustment scheme (LCAS) for SONET virtually concatenated SPEs to be included in T1.105" CONTRIBUTION TO T1 STANDARDS PROJECT, 9 October 2000 (2000-10-09), XP002177762
- SHI GUOWEI ETAL: 'Research on bandwidth management mechanism of resilient packet ring' pages 763 - 766, XP010632362

## Description

### Field of the Technology

The present invention relates to bandwidth adjusting technology for optical networks, especially to a method for dynamically and hitlessly adjusting bandwidth of a Resilient Packet Ring (RPR) ring network, which is embedded in a synchronous digital network such as a Synchronous Digital Hierarchy (SDH)/Synchronous Optical Network (SONET).

### Background of the Invention

An embedded RPR in SDH/SONET can be used to improve data transmission capability of an optical transmission device, and implement bandwidth space reuse, topology automatic detection, fairness algorithm etc. in the device.

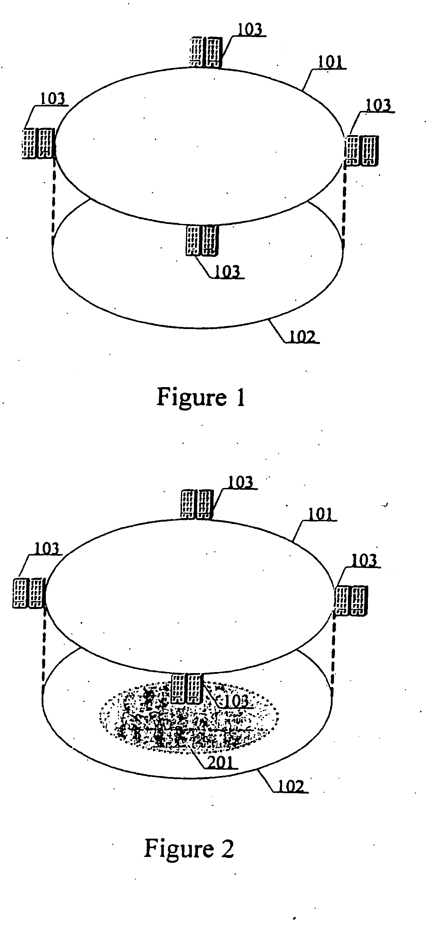

An embedded RPR in SDH/SONET is formed through adding an RPR processing layer above an SDH/SONET transmission layer. As shown in figure 1, an RPR ring network embedded in an SDH/SONET can be logically divided into an SDH processing layer 102 and an RPR processing layer 101, and the embedded RPR in SDH/SONET comprises four sites 103.

Since RPR is embedded in the SDH/SONET, it is necessary to allocate bandwidth for the RPR processing layer above the SDH/SONET processing layer, for instance, the bandwidth of two virtual containers VC4 is allocated for the RPR processing layer by the SDH/SONET processing layer with virtual cascade technique. When it is required to increase or decrease bandwidth of an optical transmission device due to some reasons, operation of the optical transmission device should be paused, and restarted after bandwidth allocation has been changed, because dynamical and hitless bandwidth-adjusting technique is not supported in the entire ring network. However, by doing this, service data transmission in the optical transmission device will certainly be interrupted, making the SDH/SONET processing layer and the RPR processing layer unable to work normally.

In addition, for an RPR ring network with bandwidth equaling to N virtual containers, when a certain virtual container on a certain link section of the RPR ring network encounters a malfunction, other undamaged virtual containers in the same link section or even in the entire ring network will be out of use since the bandwidth must keep consistent in the ring network. In this way, protection switching will be implemented in the entire RPR ring network, halving the bandwidth and greatly decreasing utilization ratio.

### Summary of the Invention

In view of this, an object of the present invention is to provide a method for adjusting bandwidth of an embedded RPR ring network dynamically and hitlessly, so as to realize dynamical and hitless bandwidth adjusting for an embedded RPR ring network in an SDH/SONET.

Jones Nevin et. al. : "Proposed text on Link capacity Adjustment Scheme (LCAS) for SONET Virtually Concatenated SPEs to be included in T1.105", contribution to T1 standard project, 9 October 2000, discloses a hit-less additional and removal of member links by using the LCAS technique to meet the bandwidth needs of the application.

To reach the above object, in one aspect, this invention provides a method as defined in claim 1. The invention further provides a method as defined in claim 5, an apparatus as defined in claim 10 and a further apparatus as defined in claim 11.

By adding a LCAS system in the SDH processing layer of the RPR ring network in a SDH/SONET, network bandwidth characteristics can be changed hitlessly with link capacity adjustment technique, thereby implementing dynamical and hitless bandwidth adjustment for the entire ring network or a certain ring network section of the embedded RPR in SDH/SONET. In this way, when bandwidth of a certain link section of the entire ring network is changed due to malfunction or malfunction restoration, bandwidth of other links with no malfunction can be changed with link capacity adjustment technique, so as to keep bandwidth consistence for the entire ring network at all times, making the entire ring network still work normally without necessity of protection switching and avoiding resource waste.

### Brief Description of the Drawings

Figure 1 is a schematic diagram illustrating logical structure of an embedded RPR ring network in SDH/SONET according to the prior art.
Figure 2 is a schematic diagram illustrating logical structure of an embedded RPR ring network in SDH/SONET according to the present invention.

### Detailed Description of the Invention

Now, the present invention will be described in detail hereinafter with reference to the accompanying drawings.

In the present invention, Link Capacity Adjustment Scheme (LCAS) is combined with virtual cascade technique, that is, a LCAS system is added in the SDH/SONET processing layer, with which dynamical and hitless bandwidth adjustment can be realized for the entire embedded RPR ring network in SDH/SONET. Meanwhile, when a certain virtual container VCx in a certain section of the embedded RPR ring network in SDH/SONET encounters malfunction or it is required to increase or decrease bandwidth of a certain section of the embedded RPR ring network in SDH/SONET, the entire embedded RPR ring network in SDH/SONET can keep working normally without the need of protection switching, thus avoiding resource waste.

In conventional technology, RPR data frames are encapsulated into the payload of N virtual containers by the SDH/SONET processing layer with virtual cascade technique. The virtual cascade technique can be used to realize continuous bandwidth allocation for the entire ring network, namely it is capable of supporting bandwidth allocation for the entire ring network. On the other hand, LCAS technique can increase or decrease the number of virtual containers dynamically and hitlessly, thus increasing or decreasing the total network mapping capacity, with which hitless data transmission can be realized during the process of adjusting the network capacity. Meanwhile, when a certain virtual container in the network is detected as invalid through LCAS technique, LCAS technique can automatically reduce network capacity and remove the invalid virtual container; when it is detected through LCAS technique that the invalid virtual container has been restored, the restored virtual container can be reloaded, and the current network capacity will be automatically restored to that before this virtual container is invalid. Therefore, by performing LCAS protocol processing on the basis of virtual cascade technique, the present invention can combine the bandwidth allocation and the bandwidth adjustment for an embedded RPR ring network in SDH/SONET , thus achieving dynamical and hitless adjustment of bandwidth of a ring network.

Figure 2 is a schematic diagram illustrating the logical structure of an embedded RPR ring network in SDH/SONET according to the present invention. As shown in figure 2, LCAS system 201 is added in SDH/SONET processing layer 102 of an embedded RPR ring network in SDH/SONET.

With coordinated operation of SDH/SONET processing layer, RPR processing layer and LCAS system of the embedded RPR ring network in SDH/SONET, dynamical and hitless adjustment of bandwidth of the embedded RPR ring network in SDH/SONET is implemented; meanwhile, it is still guaranteed that the embedded RPR ring network in SDH/SONET works normally when bandwidth of a certain link section in the embedded RPR ring network in SDH/SONET is increased or decreased, which will be described in detail hereinafter.

When it is needed to increase bandwidth of the entire embedded RPR ring network in SDH/SONET, for instance, when it is required to increase the bandwidth of an embedded RPR ring network in SDH/SONET from 3 virtual containers VC3/STS- to 4 virtual containers VC3/STS-1 due to network capacity expansion, the specific steps for dynamically and hitlessly adjusting the bandwidth of the RPR ring network in SDH/SONET are as follows:
First, the bandwidth between each site of the ring network on the SDH/SONET processing layer is increased, that is, the bandwidth between each site is adjusted from 3 virtual containers VC3/STS-1 to 4 virtual containers VC3/STS-1 by means of either manual operation or automatic allocation. Then, the LCAS system in the SDH/SONET processing layer is started, and the bandwidth of the entire ring network on the SDH/SONET processing layer is increased hitlessly from 3 virtual containers VC3/STS-1 to 4 virtual containers VC3/STS-1. Finally, bandwidth allocation parameters of the ring network on the RPR processing layer is adjusted, and the bandwidth of the entire ring network on the RPR processing layer is increased hitlessly from 3 virtual containers VC3/STS-1 to 4 virtual containers VC3/STS-1, thereby completing hitless bandwidth increment of the entire embedded RPR ring network in SDH/SONET.

Similarly, when it is needed to decrease bandwidth of the entire embedded RPR ring network in SDH/SONET, for instance, when it is required to decrease the bandwidth of an embedded RPR ring network in SDH/SONET from 3 virtual containers VC3/STS-1 to 2 virtual containers VC3/STS-1 due to requirement of client, the specific steps for dynamically and hitlessly adjusting bandwidth of the RPR ring network in SDH/SONET are as follows:
First, bandwidth allocation parameters of the ring network on the RPR processing layer is adjusted, and the bandwidth of the entire ring network on the RPR processing layer is decreased hitlessly from 3 virtual containers VC3/STS-1 to 2 virtual containers VC3/STS-1. Then, the LCAS system in the SDH/SONET processing layer is started, and the bandwidth of the entire ring network on the SDH/SONET processing layer is decreased hitlessly from 3 virtual containers VC3/STS-1 to 2 virtual containers VC3/STS-1. Finally, the bandwidth between each site of the ring network on the SDH/SONET processing layer is decreased, that is, the bandwidth between each site is adjusted from 3 virtual containers VC3/STS-1 to 2 virtual containers VC3/STS-1, and one redundant virtual container VC3/STS-1 between each site is removed. The adjusting can be carried out by means of either manual operation or automatic allocation. In this way, hitless bandwidth decrement of the entire embedded RPR ring network in SDH/SONET is completed.

In addition, when bandwidth of a certain section of the embedded RPR ring network in SDH/SONET is increased or decreased, that is, when bandwidth between sites is increased or decreased, normal operation of the embedded RPR ring network in SDH/SONET can be guaranteed with the method provided by the present invention, without necessity of protection switching.

Taking the situation that a certain section of link encounters malfunction as an example and assuming that the bandwidth of the current entire embedded RPR ring network in SDH/SONET is 4 virtual containers VC3/STS-1 when a virtual container VC3/STS-1 between certain two sites encounters a malfunction, bandwidth of other links having no malfunction can be decreased by operation of the LCAS system so as to guarantee bandwidth consistence of the entire ring network. Specifically speaking, first, bandwidth allocation parameters of the ring network on the RPR processing layer are adjusted, and the bandwidth of the entire ring network on the RPR processing layer is decreased hitlessly from 4 virtual containers VC3/STS-1 to 3 virtual containers VC3/STS-1. Then, the LCAS system in the SDH/SONET processing layer is started, and the bandwidth of the entire ring network on the SDH/SONET processing layer is decreased hitlessly from 4 virtual containers VC3/STS-1 to 3 virtual containers VC3/STS-1. Finally, the bandwidth between each site of the ring network on the SDH/SONET processing layer is decreased, that is, the bandwidth between each site is decreased from 4 virtual containers VC3/STS-1 to 3 virtual containers VC3/STS-1, thus completing bandwidth consistence adjustment for the entire embedded RPR ring network in SDH/SONET without necessity of protection switching.

When the virtual container VC3/STS-1 with malfunction between two sites is restored to normality, bandwidth of other links with no malfunction should be increased still by operation of the LCAS system so as to guarantee bandwidth consistence of the entire ring network. Specifically speaking, first, the bandwidth between each site of the ring network on the SDH/SONET processing layer is increased, that is, the bandwidth between each site is increased from 3 virtual containers VC3/STS-1 to 4 virtual containers VC3/STS-1. Then, the LCAS system in the SDH/SONET processing layer is started, and the bandwidth of the entire ring network on the SDH/SONET processing layer is increased hitlessly from 3 virtual containers VC3/STS-1 to 4 virtual containers VC3/STS-1. Finally, bandwidth allocation parameters of the ring network on the RPR processing layer are adjusted, and the bandwidth of the entire ring network on the RPR processing layer is increased hitlessly from 3 virtual containers VC3/STS-1 to 4 virtual containers VC3/STS-1, thereby completing bandwidth consistence adjustment for the entire embedded RPR ring network in SDH/SONET.

In the implementing course of the above scheme, the LCAS system in the SDH/SONET processing layer can be started either manually or automatically, i.e., the LCAS system can be started by inputting configuration commands in real time, or by predefining the conditions for starting the LCAS system. With the latter option, the LCAS system will be started automatically when the conditions are satisfied.

To sum up, the above description is just a preferable embodiment of the present invention, not to be construed as confining the protective scope of the present invention.

## Claims

1. A method for adjusting bandwidth of an embedded Resilient Packet Ring, RPR, ring network dynamically and hitlessly, applicable for an embedded RPR ring network in a Synchronous Digital Hierarchy, SDH/Synchronous Optical Network, SONET, comprising an SDH/SONET processing layer (102) and an RPR processing layer (101), **characterized in that** the method comprises:
allocating a demanded bandwidth as bandwidth of a link between sites to be increased in a ring network on the SDH/SONET processing layer (102);
starting a Link Capacity Adjustment Scheme, LCAS, system (201) in the SDH/SONET processing layer (102), and hitlessly increasing the actual bandwidth of the link, in which bandwidth is required to be increased, of the ring network on the SDH/SONET processing layer (102) to the demanded bandwidth; and
configuring the demanded bandwidth as bandwidth of the ring network on the RPR processing layer (101).

2. A method according to claim 1, wherein
allocating the demanded bandwidth as bandwidth of the link between sites to be increased in the ring network on the SDH/SONET processing layer (102) comprises: allocating the demanded bandwidth as bandwidth of links between all sites in the ring network on the SDH/SONET processing layer (102); and
starting the LCAS system (201) in the SDH/SONET processing layer (102), and hitlessly increasing the actual bandwidth of the link of the ring network on the SDH/SONET processing layer (102) to the demanded bandwidth comprises: starting the LCAS system (201) in the SDH/SONET processing layer (102), and hitlessly increasing the actual bandwidth of the links of the entire ring network on the SDH/SONET processing layer (102) to the demanded bandwidth.

3. A method according to claim 1 or 2, wherein configuring the demanded bandwidth as bandwidth of the ring network on the RPR processing layer (101) is implemented through adjusting bandwidth allocation parameters of the ring network on the RPR processing layer (101).

4. A method according to claim 1 or 2, wherein the LCAS system (201) in the SDH/SONET processing layer (102) is started with management manner or automatic manner.

5. A method for adjusting bandwidth of an embedded Resilient Packet Ring, RPR, ring network dynamically and hitlessly, applicable for an embedded RPR ring network in a Synchronous Digital Hierarchy, SDH/Synchronous Optical Network, SONET, comprising an SDH/SONET processing layer (102) and an RPR processing layer (101), **characterized in that** the method comprises:
allocating a demanded bandwidth as bandwidth of a ring network on the RPR processing layer (101);
starting a Link Capacity Adjustment Scheme, LCAS, system (201) in the SDH/SONET processing layer (102), and hitlessly decreasing the actual bandwidth of the link, in which bandwidth is required to be decreased, of the ring network on the SDH/SONET processing layer (102) to the demanded bandwidth; and
configuring a demanded bandwidth as bandwidth of a link between sites to be decreased in the ring network on the SDH/SONET processing layer (102).

6. A method according to claim 5, wherein
starting the LCAS system in the SDH/SONET processing layer (102) and hitlessly decreasing the actual bandwidth of the link of the ring network on the SDH/SONET processing layer (102) to the demanded bandwidth comprises: starting the LCAS system (201) in the SDH/SONET processing layer (102), and hitlessly decreasing the actual bandwidth of the links of the entire ring network on the SDH/SONET processing layer (102) to the demanded bandwidth, and
configuring the demanded bandwidth as bandwidth of the link between sites to be decreased in the ring network on the SDH/SONET processing layer (102) comprises:
configuring the demanded bandwidth as bandwidth of links between all sites in the ring network on the SDH/SONET processing layer (102).

7. A method according to claim 5 or 6, wherein allocating the demanded bandwidth as bandwidth of the ring network on the RPR processing layer (101) is implemented through adjusting bandwidth allocation parameters of the ring network on the RPR processing layer (101).

8. A method according to claim 5 or 6, further comprising: removing redundant virtual containers in links between sites of the ring network on the SDH/SONET processing layer (102).

9. A method according to claim 5 or 6, wherein the LCAS system (201) in the SDH/SONET processing layer (102) is started with management manner or automatic manner.

10. An apparatus for adjusting bandwidth of an embedded Resilient Packet Ring, RPR, ring network dynamically and hitlessly, applicable for an embedded RPR ring network in a Synchronous Digital Hierarchy, SDH/Synchronous Optical Network, SONET, comprising an SDH/SONET processing layer (102) and an RPR processing layer (101), **characterized in that** the apparatus comprises:
a means for allocating a demanded bandwidth as bandwidth of a link between sites to be increased in a ring network on the SDH/SONET processing layer (102);
a means for starting a Link Capacity Adjustment Scheme, LCAS, system (201) in the SDH/SONET processing layer (102), and hitlessly increasing the actual bandwidth of the link, in which bandwidth is required to be increased, of the ring network on the SDH/SONET processing layer (102) to the demanded bandwidth; and
a means for configuring the demanded bandwidth as bandwidth of the ring network on the RPR processing layer (101).

11. An apparatus for adjusting bandwidth of an embedded Resilient Packet Ring, RPR, ring network dynamically and hitlessly, applicable for an embedded RPR ring network in a Synchronous Digital Hierarchy, SDH/Synchronous Optical Network, SONET, comprising an SDH/SONET processing layer (102) and an RPR processing layer (101), **characterized in that** the apparatus comprises:
a means for allocating a demanded bandwidth as bandwidth of a ring network on the RPR processing layer (101);
a means for starting a Link Capacity Adjustment Scheme, LCAS, system (201) in the SDH/SONET processing layer (102), and hitlessly decreasing the actual bandwidth of the link, in which bandwidth is required to be decreased, of the ring network on the SDH/SONET processing layer (102) to the demanded bandwidth; and
a means for configuring a demanded bandwidth as bandwidth of a link between sites to be decreased in the ring network on the SDH/SONET processing layer (102).

## Patentansprüche

1. Verfahren zum dynamischen und stoßfreien Anpassen einer Bandbreite eines eingebetteten Ringnetzes eines Resilient Packet-Rings, RPR, das für ein eingebettetes RPR-Ringnetz in einer synchronen digitalen Hierarchie, SDH/einem synchronen optischen Netz, SONET, das eine SDH/SONET-Verarbeitungsschicht (102) und eine RPR-Verarbeitungsschicht (101) aufweist, anwendbar ist, **dadurch gekennzeichnet, dass** das Verfahren folgende Schritte aufweist:
Zuteilen einer geforderten Bandbreite als eine zu erhöhende Bandbreite einer Verbindung zwischen Orten in einem Ringnetz auf der SDH/SONET-Verarbeitungsschicht (102);
Starten eines Link-Capacity-Adjustment-Schema-, LCAS-, Systems (201) in der SDH/SONET-Verarbeitungsschicht (102) und stoßfreies Erhöhen der tatsächlichen Bandbreite der Verbindung, bei der es erforderlich ist, dass die Bandbreite erhöht wird, des Ringnetzes auf der SDH/SONET-Verarbeitungsschicht (102) auf die geforderte Bandbreite; und
Konfigurieren der geforderten Bandbreite als eine Bandbreite des Ringnetzes auf der RPR-Verarbeitungsschicht (101).

2. Verfahren nach Anspruch 1, bei dem
das Zuteilen der geforderten Bandbreite als die zu erhöhende Bandbreite der Verbindung zwischen Orten in dem Ringnetz auf der SDH/SONET-Verarbeitungsschicht (102) ein Zuteilen der geforderten Bandbreite als eine Bandbreite von Verbindungen zwischen allen Orten in dem Ringnetz auf der SDH/SONET-Verarbeitungsschicht (102) aufweist; und
das Starten des LCAS-Systems (201) in der SDH/SONET-Verarbeitungsschicht (102) und das stoßfreie Erhöhen der tatsächlichen Bandbreite der Verbindung des Ringnetzes auf der SDH/SONET-Verarbeitungsschicht (102) auf die geforderte Bandbreite ein Starten des LCAS-Systems (201) in der SDH/SONET-Verarbeitungsschicht (102) und ein stoßfreies Erhöhen der tatsächlichen Bandbreite der Verbindungen des gesamten Ringnetzes auf der SDH/SONET-Verarbeitungsschicht (102) auf die geforderte Bandbreite aufweist.

3. Verfahren nach Anspruch 1 oder 2, bei dem das Konfigurieren der geforderten Bandbreite als die Bandbreite des Ringnetzes auf der RPR-Verarbeitungsschicht (101) durch Anpassen von Bandbreitenzuteilungsparametern des Ringnetzes auf der RPR-Verarbeitungsschicht (101) implementiert wird.

4. Verfahren nach Anspruch 1 oder 2, bei dem das LCAS-System (201) in der SDH/SONET-Verarbeitungsschicht (102) auf eine Verwaltungsweise oder eine automatische Weise gestartet wird.

5. Verfahren zum dynamischen und stoßfreien Anpassen einer Bandbreite eines eingebetteten Ringnetzes eines Resilient Packet-Rings, RPR, das für ein eingebettetes RPR-Ringnetz in einer synchronen digitalen Hierarchie, SDH/einem synchronen optischen Netz, SONET, das eine SDH/SONET-Verarbeitungsschicht (102) und eine RPR-Verarbeitungsschicht (101) aufweist, anwendbar ist, **dadurch gekennzeichnet, dass** das Verfahren folgende Schritte aufweist:
Zuteilen einer geforderten Bandbreite als eine Bandbreite eines Ringnetzes auf der RPR-Verarbeitungsschicht (101);
Starten eines Link-Capacity-Adjustment-Schema-, LCAS-, Systems (201) in der SDH/SONET-Verarbeitungsschicht (102) und stoßfreies Verringern der tatsächlichen Bandbreite der Verbindung, bei der es erforderlich ist, dass die Bandbreite verringert wird, des Ringnetzes auf der SDH/SONET-Verarbeitungsschicht (102) auf die geforderte Bandbreite; und
Konfigurieren einer geforderten Bandbreite als eine zu verringernde Bandbreite einer Verbindung zwischen Orten in dem Ringnetz auf der SDH/SONET-Verarbeitungsschicht (102).

6. Verfahren nach Anspruch 5, bei dem
das Starten des LCAS-Systems in der SDH/SONET-Verarbeitungsschicht (102) und das stoßfreie Verringern der tatsächlichen Bandbreite der Verbindung des Ringnetzes auf der SDH/SONET-Verarbeitungsschicht (102) auf die geforderte Bandbreite ein Starten des LCAS-Systems (201) in der SDH/SONET-Verarbeitungsschicht (102) und ein stoßfreies Verringern der tatsächlichen Bandbreite der Verbindungen des gesamten Ringnetzes auf der SDH/SONET-Verarbeitungsschicht (102) auf die geforderte Bandbreite aufweist, und
das Konfigurieren der geforderten Bandbreite als die zu verringernde Bandbreite der Verbindung zwischen Orten in dem Ringnetz auf der SDH/SONET-Verarbeitungsschicht (102) ein Konfigurieren der geforderten Bandbreite als eine Bandbreite von Verbindungen zwischen allen Orten in dem Ringnetz auf der SDH/SONET-Verarbeitungsschicht (102) aufweist.

7. Verfahren nach Anspruch 5 oder 6, bei dem das Zuteilen der geforderten Bandbreite als die Bandbreite des Ringnetzes auf der RPR-Verarbeitungsschicht (101) durch Anpassen von Bandbreitenzuteilungsparametern des Ringnetzes auf der RPR-Verarbeitungsschicht (101) implementiert wird.

8. Verfahren nach Anspruch 5 oder 6, ferner mit einem Schritt eines Entfernens redundanter virtueller Behälter bei Verbindungen zwischen Orten des Ringnetzes auf der SDH/SONET-Verarbeitungsschicht (102).

9. Verfahren nach Anspruch 5 oder 6, bei dem das LCAS-System (201) in der SDH/SONET-Verarbeitungsschicht (102) auf eine Verwaltungsweise oder eine automatische Weise gestartet wird.

10. Vorrichtung zum dynamischen und stoßfreien Anpassen einer Bandbreite eines eingebetteten Ringnetzes eines Resilient Packet-Rings, RPR, die für ein eingebettetes RPR-Ringnetz in einer synchronen digitalen Hierarchie, SDH/einem synchronen optischen Netz, SONET, das eine SDH/SONET-Verarbeitungsschicht (102) und eine RPR-Verarbeitungsschicht (101) aufweist, anwendbar ist, **dadurch gekennzeichnet, dass** die Vorrichtung folgende Merkmale aufweist:
eine Einrichtung zum Zuteilen einer geforderten Bandbreite als eine zu erhöhende Bandbreite einer Verbindung zwischen Orten in einem Ringnetz auf der SDH/SONET-Verarbeitungsschicht (102);
eine Einrichtung zum Starten eines Link-Capacity-Adjustment-Schema-, LCAS-, Systems (201) in der SDH/SONET-Verarbeitungsschicht (102) und stoßfreien Erhöhen der tatsächlichen Bandbreite der Verbindung, bei der es erforderlich ist, dass die Bandbreite erhöht wird, des Ringnetzes auf der SDH/SONET-Verarbeitungsschicht (102) auf die geforderte Bandbreite; und
eine Einrichtung zum Konfigurieren der geforderten Bandbreite als eine Bandbreite des Ringnetzes auf der RPR-Verarbeitungsschicht (101).

11. Vorrichtung zum dynamischen und stoßfreien Anpassen einer Bandbreite eines eingebetteten Ringnetzes eines Resilient Packet-Rings, RPR, die für ein eingebettetes RPR-Ringnetz in einer synchronen digitalen Hierarchie, SDH/einem synchronen optischen Netz, SONET, das eine SDH/SONET-Verarbeitungsschicht (102) und eine RPR-Verarbeitungsschicht (101) aufweist, anwendbar ist, **dadurch gekennzeichnet, dass** die Vorrichtung folgende Merkmale aufweist:
eine Einrichtung zum Zuteilen einer geforderten Bandbreite als eine Bandbreite eines Ringnetzes auf der RPR-Verarbeitungsschicht (101);
eine Einrichtung zum Starten eines Link-Capacity-Adjustment-Schema-, LCAS-, Systems (201) in der SDH/SONET-Verarbeitungsschicht (102) und stoßfreien Verringern der tatsächlichen Bandbreite der Verbindung, bei der es erforderlich ist, dass die Bandbreite verringert wird, des Ringnetzes auf der SDH/SONET-Verarbeitungsschicht (102) auf die geforderte Bandbreite; und
eine Einrichtung zum Konfigurieren einer geforderten Bandbreite als eine zu verringernde Bandbreite einer Verbindung zwischen Orten in dem Ringnetz auf der SDH/SONET-Verarbeitungsschicht (102).

## Revendications

1. Procédé destiné à ajuster une largeur de bande d'un réseau en anneau par paquet flexible, RPR, intégré, de manière lisse et dynamique, applicable à un réseau en anneau par paquet flexible (RPR) intégré dans une hiérarchie numérique synchrone, SDH, / réseau optique synchrone, SONET, comportant une couche de traitement de hiérarchie numérique synchrone / réseau optique synchrone (SDH/SONET) (102) et une couche de traitement d'anneau par paquet flexible (RPR) (101), **caractérisé en ce que** le procédé comporte les étapes consistant à:
affecter une largeur de bande désirée en tant que largeur de bande d'une liaison entre des sites devant être augmentée dans un réseau en anneau sur la couche de traitement de hiérarchie numérique synchrone / réseau optique synchrone (SDH/SONET) (102);
initier un système de schéma d'ajustement de la capacité d'une liaison, LCAS, (201) dans la couche de traitement de hiérarchie numérique synchrone / réseau optique synchrone (SDH/SONET) (102), et augmenter de manière lisse la largeur de bande en cours de la liaison, dans laquelle la largeur de bande nécessite d'être augmentée, du réseau en anneau sur la couche de traitement de hiérarchie numérique synchrone / réseau optique synchrone (SDH/SONET) (102) à la largeur de bande désirée; et
configurer la largeur de bande requise en tant que largeur de bande du réseau en anneau sur la couche de traitement d'anneau par paquet flexible (RPR) (101).

2. Procédé selon la revendication 1, dans lequel
l'étape consistant à affecter la largeur de bande désirée en tant que largeur de bande de la liaison entre des sites devant être augmentée dans un réseau en anneau sur la couche de traitement de hiérarchie numérique synchrone / réseau optique synchrone (SDH/SONET) (102) comporte l'étape consistant à: affecter la largeur de bande désirée en tant que largeur de bande de liaisons entre tous les sites dans le réseau en anneau sur la couche de traitement de hiérarchie numérique synchrone / réseau optique synchrone (SDH/SONET) (102); et
initier le système de schéma d'ajustement de la capacité d'une liaison (LCAS) (201) dans la couche de traitement de hiérarchie numérique synchrone / réseau optique synchrone (SDH/SONET) (102), et augmenter de manière lisse la largeur de bande en cours de la liaison du réseau en anneau sur la couche de traitement de hiérarchie numérique synchrone / réseau optique synchrone (SDH/SONET) (102) à la largeur de bande désirée comporte l'étape consistant à: initier le système de schéma d'ajustement de la capacité d'une liaison (LCAS) (201) dans la couche de traitement de hiérarchie numérique synchrone / réseau optique synchrone (SDH/SONET) (102), et augmenter de manière lisse la largeur de bande en cours des liaisons de la totalité du réseau en anneau sur la couche de traitement de hiérarchie numérique synchrone / réseau optique synchrone (SDH/SONET) (102) à la largeur de bande désirée.

3. Procédé selon la revendication 1 ou 2, dans lequel l'étape consistant à configurer la largeur de bande désirée en tant que largeur de bande du réseau en anneau sur la couche de traitement d'anneau par paquet flexible (RPR) (101) est mise en oeuvre via l'ajustement de paramètres d'affectation de largeur de bande du réseau en anneau sur la couche de traitement d'anneau par paquet flexible (101).

4. Procédé selon la revendication 1 ou 2, dans lequel le système de schéma d'ajustement de la capacité d'une liaison (LCAS) (201) dans la couche de traitement de hiérarchie numérique synchrone / réseau optique synchrone (SDH/SONET) (102) est initié d'une manière gérée manuellement ou d'une manière automatique.

5. Procédé destiné à ajuster une largeur de bande d'un réseau en anneau par paquet flexible, RPR, intégré, de manière lisse et dynamique, applicable à un réseau en anneau par paquet flexible (RPR) intégré dans une hiérarchie numérique synchrone, SDH, / réseau optique synchrone, SONET, comportant une couche de traitement de hiérarchie numérique synchrone / réseau optique synchrone (SDH/SONET) (102) et une couche de traitement d'anneau par paquet flexible (RPR) (101), **caractérisé en ce que** le procédé comporte les étapes consistant à:
affecter une largeur de bande désirée en tant que largeur de bande d'un réseau en anneau sur la couche de traitement d'anneau par paquet flexible (RPR) (101);
initier un système de schéma d'ajustement de la capacité d'une liaison, LCAS, (201) dans la couche de traitement de hiérarchie numérique synchrone / réseau optique synchrone (SDH/SONET) (102), et diminuer de manière lisse la largeur de bande en cours de la liaison, dans laquelle la largeur de bande nécessite d'être diminuée, du réseau en anneau sur la couche de traitement de hiérarchie numérique synchrone / réseau optique synchrone (SDH/SONET) (102) à la largeur de bande désirée; et
configurer une largeur de bande désirée en tant que largeur de bande de la liaison entre des sites devant être diminuée dans le réseau en anneau sur la couche de traitement de hiérarchie numérique synchrone / réseau optique synchrone (SDH/SONET) (102).

6. Procédé selon la revendication 5, dans lequel
l'étape consistant à initier le système de schéma d'ajustement de la capacité d'une liaison (LCAS) dans la couche de traitement de hiérarchie numérique synchrone / réseau optique synchrone (SDH/SONET) (102), et diminuer de manière lisse la largeur de bande en cours de la liaison de la liaison du réseau en anneau sur la couche de traitement de hiérarchie numérique synchrone / réseau optique synchrone (SDH/SONET) (102) à la largeur de bande désirée comporte l'étape consistant à: initier le système de schéma d'ajustement de la capacité d'une liaison (LCAS) (201) dans la couche de traitement de hiérarchie numérique synchrone / réseau optique synchrone (SDH/SONET) (102), et diminuer de manière lisse la largeur de bande en cours des liaisons de la totalité du réseau en anneau sur la couche de traitement de hiérarchie numérique synchrone / réseau optique synchrone (SDH/SONET) (102) à la largeur de bande désirée; et
configurer la largeur de bande désirée en tant que largeur de bande de la liaison entre des sites devant être diminuée dans le réseau en anneau sur la couche de traitement de hiérarchie numérique synchrone / réseau optique synchrone (SDH/SONET) (102) comporte l'étape consistant à: configurer la largeur de bande désirée en tant que largeur de bande de liaisons entre tous les sites dans le réseau en anneau sur la couche de traitement de hiérarchie numérique synchrone / réseau optique synchrone (SDH/SONET) (102).

7. Procédé selon la revendication 5 ou 6, dans lequel l'étape consistant à affecter la largeur de bande désirée en tant que largeur de bande du réseau en anneau sur la couche de traitement d'anneau par paquet flexible (RPR) (101) est mise en oeuvre par l'ajustement de paramètres d'affectation de largeur de bande du réseau en anneau sur la couche de traitement d'anneau par paquet flexible (RPR) (101).

8. Procédé selon la revendication 5 ou 6, comportant en outre l'étape consistant à: supprimer des enceintes virtuelles dans des liens entre des sites du réseau en anneau sur la couche de traitement de hiérarchie numérique synchrone / réseau optique synchrone (SDH/SONET) (102).

9. Procédé selon la revendication 5 ou 6, dans lequel le système de schéma d'ajustement de la capacité d'une liaison (LCAS) (201) dans la couche de traitement de hiérarchie numérique synchrone / réseau optique synchrone (SDH/SONET) (102) est initié d'une manière gérée manuellement ou d'une manière automatique.

10. Dispositif destiné à ajuster une largeur de bande d'un réseau en anneau par paquet flexible, RPR, intégré, de manière lisse et dynamique, applicable à un réseau en anneau par paquet flexible (RPR) intégré dans une hiérarchie numérique synchrone, SDH, / réseau optique synchrone, SONET, comportant une couche de traitement de hiérarchie numérique synchrone / réseau optique synchrone (SDH/SONET) (102) et une couche de traitement d'anneau par paquet flexible (RPR) (101), **caractérisé en ce que** le dispositif comporte:
un moyen pour affecter une largeur de bande désirée en tant que largeur de bande d'une liaison entre des sites devant être augmentée dans un réseau en anneau sur la couche de traitement de hiérarchie numérique synchrone / réseau optique synchrone (SDH/SONET) (102);
un moyen pour initier un système de schéma d'ajustement de la capacité d'une liaison, LCAS, (201) dans la couche de traitement de hiérarchie numérique synchrone / réseau optique synchrone (SDH/SONET) (102), et pour augmenter de manière lisse la largeur de bande en cours de la liaison, dans laquelle la largeur de bande nécessite d'être augmentée, du réseau en anneau sur la couche de traitement de hiérarchie numérique synchrone / réseau optique synchrone (SDH/SONET) (102) à la largeur de bande désirée; et
un moyen pour configurer la largeur de bande requise en tant que largeur de bande du réseau en anneau sur la couche de traitement d'anneau par paquet flexible (RPR) (101).

11. Dispositif destiné à ajuster une largeur de bande d'un réseau en anneau par paquet flexible, RPR, intégré, de manière lisse et dynamique, applicable à un réseau en anneau par paquet flexible (RPR) intégré dans une hiérarchie numérique synchrone, SDH, / réseau optique synchrone, SONET, comportant une couche de traitement de hiérarchie numérique synchrone / réseau optique synchrone (SDH/SONET) (102) et une couche de traitement d'anneau par paquet flexible (RPR) (101), **caractérisé en ce que** le dispositif comporte:
un moyen pour affecter une largeur de bande désirée en tant que largeur de bande d'un réseau en anneau sur une couche de traitement d'anneau par paquet flexible (RPR) (101);
un moyen pour initier un système de schéma d'ajustement de la capacité d'une liaison, LCAS, (201) dans la couche de traitement de hiérarchie numérique synchrone / réseau optique synchrone (SDH/SONET) (102), et pour diminuer de manière lisse la largeur de bande en cours de la liaison, dans laquelle la largeur de bande nécessite d'être diminuée, du réseau en anneau sur la couche de traitement de hiérarchie numérique synchrone / réseau optique synchrone (SDH/SONET) (102) à la largeur de bande désirée; et
un moyen pour configurer une largeur de bande désirée en tant que largeur de bande d'une liaison entres des sites devant être diminuée dans le réseau en anneau sur la couche de traitement hiérarchie numérique synchrone / réseau optique synchrone (SDH/SONET) (102).
